# EUROPÄISCHE PATENTSCHRIFT

(11) **EP 0 797 923 B1**
(45) Veröffentlichungstag und Bekanntmachung des Hinweises auf die Patenterteilung: **10.04.2002**
(21) Anmeldenummer: 97101443.6
(22) Anmeldetag: 30.01.1997
(51) Int. Cl.: A23G 7/02

(54) **Kühltunnel für Süsswarenstücke**
Cooling tunnel for sweet meat articles
Tunnel de refroidissement pour articles de confiserie

(30) Priorität: 24.02.1996 DE 19607055
(43) Veröffentlichungstag der Anmeldung: 01.10.1997
(73) Patentinhaber: Sollich KG, 32105 Bad Salzuflen (DE)
(72) Erfinder: Sollich, Helmut, 24407 Rabenkirchen (DE)
(74) Vertreter: Patentanwälte Rehberg + Hüppe

(56) Entgegenhaltungen:
- CH-A- 403 458
- DE-A- 2 322 918
- DE-A- 2 425 098
- DE-A- 4 040 429
- DE-A- 4 311 589
- DE-C- 353 460
- DE-C- 396 193
- GB-A- 1 152 222
- GB-A- 1 283 073
- GB-A- 2 131 936
- "KONTINUIERLICHE KÜHLUNG" WERKSTATT & BETRIEB, Bd. 111, Nr. 5, Mai 1978 (1978-05), Seite 322 XP002115999
- "Sollich coling tunnels" CONFECTIONERY PRODUCTION, Bd. 56, Nr. 6, Juni 1990 (1990-06), Seite 477 XP000133828 Surbiton GB

## Beschreibung

Die Erfindung betrifft einen Kühltunnel für Süßwarenstücke, die einen Produktkern und einen Überzug aus einer insbesondere vorkristallisierten Masse, beispielsweise Schokolade, aufweisen, mit einem angetriebenen Transportband, auf dem die Süßwarenstücke liegend in Bandlaufrichtung durch den Kühltunnel gefördert werden, und mit einer oberhalb des Transportbandes wirksamen Oberkühlung, die in Bandlaufrichtung eine mit Strahlungskühlung arbeitende Kühlzone und eine mittels Konvektionskühlung arbeitende Kühlzone aufweist, wobei die mittels Konvektionskühlung arbeitende Kühlzone im Auslaufbereich des Kühltunnels angeordnet ist. Es wird weiterhin ein Verfahren zum Betrieb eines Kühltunnels für solche Süßwarenstücke aufgezeigt.

Ein Kühltunnel der eingangs beschriebenen Art ist aus der DE 23 22 918 A bekannt. Der Kühltunnel ist in mehrere Abschnitte unterteilt, die hintereinander in Bandlaufrichtung angeordnet sind. Durch den Kühltunnel wird ein Transportband geführt, auf dem die Süßwarenstücke aufliegen und während ihres Durchlaufes gekühlt werden. Der Kühltunnel besitzt eine Oberkühlung, also eine Kühlung, die in dem Bereich oberhalb der Ebene des Transportbandes wirksam wird und mit der die Süßwarenstücke von oben gekühlt werden. Weiterhin besitzt der Kühltunnel eine Bodenkühlung, die unterhalb der durch das Transportband festgelegten Ebene wirksam wird und mit der durch das Transportband hindurch der Boden der Süßwarenstücke kühlend erfaßt wird. Der bekannte Kühltunnel weist im Bereich seiner Oberkühlung in Bandlaufrichtung zwei Kühlzonen auf, wobei die erste Kühlzone, die in Bandlaufrichtung im Einlaufbereich des Kühltunnels beginnt bzw. angeordnet ist, als Absorptionskühlzone ausgebildet ist. Damit erfolgt eine milde oder schonende Kühlung der Überzüge der Süßwarenstücke im Einlaufbereich des Kühltunnels. Die zweite Kühlzone ist als Konvektionskühlzone ausgebildet und erstreckt sich im Mittelbereich bis zum Auslaufbereich des Kühltunnels in Bandlaufrichtung. In dieser zweiten Kühlzone wird vergleichsweise intensiver gekühlt, weil die Konvektionskühlung wesentlich wirksamer ist als die Absorptions- oder Strahlungskühlung. Damit werden in Bandlaufrichtung nacheinander zwei Kühlzonen angeordnet, in denen die Kühlwirkung in Bandlaufrichtung zunehmend intensiver wird. Die mildeste Kühlwirkung erfolgt am Einlaufbereich, und die Kühlwirkung wird kontinuierlich bis zum Maximum am Ende des Kühlkanals gesteigert. Zur Realisierung der Absorptionskühlung wird eine Platte in den Kühltunnel eingesetzt, die gegen Platten mit abweichenden Längen auswechselbar ist, so daß die Länge der Platte und damit der Absorptionskühlzone dem jeweils zu verarbeitenden Gut angepaßt werden kann. Dies zielt darauf ab, den Übergang von der Strahlungskühlung zur Konvektionskühlung an der Hinterkante der Platte zum frühestmöglichen Zeitpunkt eintreten zu lassen.

Aus der Zeitschrift Süßwaren 1/2-88, Seiten 43 - 47 "Universal-Kühlkanäle für Kuvertüre, Kakaoglasuren und Gegenstromkühlung" ist ein Kühltunnel bekannt, der eine Bodenkühlung und eine Oberkühlung aufweist. Die Oberkühlung wird in der Regel in einer durchgehenden Kühlzone realisiert, die aber von Strahlungskühlung auf Konvektionskühlung bzw. umgekehrt umgestellt werden kann. Es ist auch möglich, innerhalb der Oberkühlung zwei Bereiche oder zwei Kühlzonen zu schaffen und dabei die in Bandlaufrichtung erste Kühlzone als Strahlungskühlzone und die in Bandlaufrichtung zweite Kühlzone als Konvektionskühlzone auszubilden bzw. umzurüsten. Um optimale Kühlbedingungen für unterschiedliche Produkte zu schaffen und beispielsweise von einer Überzugsmasse auf die andere zu wechseln, ist es erforderlich, die Temperaturen, die Luft-Laufrichtung und die Geschwindigkeit zu variieren und die Konvektions- und Strahlungskühlung zu justieren. Je nach dieser Justage und Einstellung ergeben sich unterschiedliche Verläufe der Temperatur der Kühlluft in Bandlaufrichtung, wobei die niedrigsten Temperaturen etwa im Mittelbereich des Kühltunnels Anwendung finden, so daß hier die intensivste Kühlung stattfindet. Im Bereich des Auslaufes des Kühltunnels werden dagegen höhere Lufttemperaturen angewendet, um die Oberflächentemperaturen der Überzüge nicht unter den Taupunkt abzusenken und so eine Kondensation von Feuchtigkeit aus der Umgebungsluft auf den Süßwarenstücken zu vermeiden.

Aus der DE-C-396 193 ist eine Vorrichtung zur Behandlung einer Masse, z. B. Schokolade, mittels im Kreislauf zugeführter, gasförmiger Stoffe bekannt, bei der die zu behandelnde Masse durch mehrere Abteile hindurchgeführt und in diesen der Einwirkung symmetrisch kreisender Ströme der gasförmigen Stoffe, die keinerlei Feuchtigkeit enthalten, ausgesetzt werden. Die Vorrichtung weist eine Mehrzahl von Abteilen auf, in denen eine kombinierte Boden- und Oberkühlung Anwendung findet, die für jedes Abteil ausgebildet und vorgesehen ist. Damit werden in den Abteilen Kühlzonen geschaffen, die ausschließlich mit Konvektionskühlung arbeiten.

Aus der GB-A-1 283 073 ist ein Kühltunnel bekannt, der eine Vielzahl von Kühlstufen aufweist, die ebenfalls ausschließlich mit Konvektionskühlung arbeiten. Im Bereich der Oberkühlung sind die über dem Transportband angeordneten Räume durch Leitbleche und Klappen unterteilt, so daß ein gemeinsamer Kühlluftstrom mit unterschiedlicher Geschwindigkeit und unterschiedlichen Temperaturen im Gegenstrom durch die einzelnen Kühlstufen geleitet werden kann. Dabei ist eine Temperatur- und Geschwindigkeitsstufung vorgesehen, und zwar derart, daß die Temperatur der Kühlluft von Stufe zu Stufe abnimmt und die Geschwindigkeit der Kühlluft zunimmt. Endseitig an dem Kühlkanal sind Nachwärmstufen vorgesehen, um eine Taupunktsunterschreitung zu vermeiden. Auch dieser Kühlkanal weist keine Kühlstufe auf, die mit Absorptionskühlung arbeitet.

Die DE-A-24 25 098 zeigt eine Kühlvorrichtung für Lebkuchen. Ein Kühlluftstrom aus Umgebungsluft wird im Gegenstrom durch den Kühltunnel geführt. Im mittleren Bereich des Kühltunnels ist eine Befeuchtungsvorrichtung und eine Befeuchtungsschleuse vorgesehen. Am Eingang zu der Befeuchtungsvorrichtung befindet sich eine Luftklappe, mit der ein Teilluftstrom aus dem Hauptstrom abgezweigt und über die Befeuchtungseinrichtung geführt werden kann. Der Kühltunnel arbeitet ausschließlich mit Konvektionskühlung.

Der Erfindung liegt die Aufgabe zugrunde, einen Kühltunnel der eingangs beschriebenen Art und ein Verfahren zu seinem Betrieb bereitzustellen, mit denen es möglich ist, überzogene Süßwarenstücke in möglichst kurzer Zeit zu kühlen, wobei sich trotzdem auf der Oberfläche der Überzüge der Süßwarenstücke der erwünschte Glanz einstellt und die Süßwarenstücke hinsichtlich ihrer Lagerbeständigkeit durch die Kühlung nicht negativ beeinflußt werden.

Erfindungsgemäß wird dies bei dem Kühltunnel der eingangs beschriebenen Art dadurch erreicht, daß die Oberkühlung in Bandlaufrichtung mindestens drei Kühlzonen aufweist, und daß die mit Strahlungskühlung arbeitende Kühlzone im Mittelbereich des Kühltunnels angeordnet ist.

Die Erfindung geht von dem Gedanken aus, die im Stand der Technik bekannte Zweiteilung des Kühltunnels zu verlassen und stattdessen mindestens eine Dreiteilung vorzusehen. Damit werden in der Regel drei Kühlzonen geschaffen, wobei es durchaus möglich ist, eine oder mehrere der Kühlzonen nochmals zu unterteilen. Dabei ist im Mittelbereich des Kühltunnels eine mit Strahlungskühlung arbeitende Kühlzone geschaffen bzw. vorgesehen, um hier eine schonende Kühlung zu realisieren. Es ist sogar möglich, in diesem Mittelbereich die Temperatur des Überzuges zumindest für eine begrenzte Zeitdauer konstant zu halten und nur so schwach zu kühlen, daß bei Verwendung eines Überzuges aus Schokolade die Kakaobutter in der gewünschten Kristallform und in ausreichender Geschwindigkeit erstarrt. Es soll also in diesem Mittelbereich im wesentlichen nur die Erstarrungswärme des Überzuges abgeführt werden. Eine schnellere oder weitere Abkühlung des Überzuges während dieser Erstarrung hätte den Nachteil, daß sich hier vermehrt instabile, niedrig schmelzende Kristallformen bilden würden. Es wird also in diesem Mittelbereich mit geringer Intensität gekühlt, um im wesentlichen die durch die Erstarrung der Schokolade anfallende latente Wärme abzuführen. Diese mit Strahlungskühlung arbeitende Kühlzone im Mittelbereich des Kühltunnels erstreckt sich in Bandlaufrichtung so weit, bis ein Zustand eintritt, an dem der Überzug aus Schokolade nicht mehr flüssig, jedoch auch noch nicht durchgehärtet ist. Von dem Fettanteil der Überzugsmasse befinden sich hier noch bis ca. 30 % in flüssigem Zustand. In der nachfolgenden, im Mittel- und Auslaufbereich des Kühltunnels vorgesehenen dritten Kühlzone wird nun wieder intensiv gekühlt, und zwar durch Konvektion. Die Aufgabe dieser dritten Kühlzone ist es, sowohl den Überzug aus Schokolade wie auch den Produktkern der Süßwarenstücke weiter abzukühlen und dabei die sensible Wärme abzuführen. Dabei wird auch eine möglichst große Menge des restlichen flüssigen Fettanteiles zur Erstarrung gebracht und insoweit dessen latente Wärme abgeführt. Die abzuführende Wärmemenge ist in diesem Bereich beträchtlich, so daß dies nur durch eine Konvektionskühlung erreichbar ist, wenn gleichzeitig auf eine kurze Baulänge des Kühltunnels in diesem Bereich geachtet wird. Die Anwendung der Strahlungskühlung im Mittelbereich des Kühltunnels hat zwar den Nachteil der vergleichsweise größeren Baulänge im Vergleich zu einer Konvektionskühlung, erbringt aber den Vorteil, daß damit ein insgesamt optimaler Abkühlverlauf für das Produkt, also die Süßwarenstücke, erzielbar ist, so daß damit gleichsam eine Grundanpassung im Sinne eines Universal-Kühlkanals an unterschiedliche Süßwarenstücke aus unterschiedlichen Produktkernen und unterschiedlichen Überzugsmassen gegeben ist.

Mit dem neuen Kühltunnel wird angestrebt, die in einer Temperiermaschine zuvor in der stabilen Form vorkristallisierte Masse auch während der weiteren Kristallisation beim Durchlauf durch den Kühltunnel in stabiler Kristallform erstarren zu lassen.

Der neue Kühltunnel ermöglicht es durch seine Dreiteilung, Fremdeinflüsse, insbesondere verursacht durch unterschiedliche Überzugsmassen, unterschiedliche Überzugsdicken und/oder unterschiedliche Produktkerne, zu kompensieren. So benötigen Überzugsmassen in Form von Milchschokolade oder weißer Schokolade aufgrund ihres Milchfettanteils und ihres geringeren Kakaobutteranteils eine ca. 50 % verlängerte Kühlzeit im Vergleich zu einer Überzugsmasse aus dunkler Schokolade. Auch die Dicke des Überzuges ist ein Parameter, auf den der Kühltunnel einstellbar sein muß. Je dicker der Überzug ist, desto länger ist die erforderliche Abkühlzeit, desto intensiver muß die Kühlung und desto niedriger die Geschwindigkeit des Transportbandes eingestellt werden. Auch die Körpertemperatur der Produktkerne der Süßwarenstücke, mit denen diese in den Einlaufbereich des Kühltunnels gelangen, ist von Bedeutung.

Auch die im Einlaufbereich des Kühltunnels angeordnete Kühlzone kann vorteilhaft eine mittels Konvektionskühlung arbeitende Kühlzone sein. Im Gegensatz zum Stand der Technik hat es sich als sinnvoll erwiesen - auch unter dem Gesichtspunkt einer kurzen Gesamtbaulänge des Kühltunnels -, die Überzugsmasse in diesem Einlaufbereich des Kühltunnels intensiv zu kühlen, damit zu Beginn der Strahlungskühlung im Mittelbereich bereits eine Temperatur in der Überzugsmasse erreicht ist, bei der die Bildung stabiler Kristalle möglich ist. Grundsätzlich kann aber in dieser ersten Kühlzone jede der beiden Kühlungsarten, Strahlungskühlung oder Konvektionskühlung, angewendet werden.

Die Längen der drei Kühlzonen können veränderlich einstellbar sein, um eine bessere Anpassung an das jeweils zu kühlende Produkt zu erreichen. Damit können Einflüsse ausgeglichen werden, die von der Art der Überzugsmasse, der Dicke des Überzuges, der Temperatur des Produktkerns, dem Wärmeinhalt des Produktkerns, abhängig von dessen spezifischem Gewicht, von der Größe der Oberfläche des Produktkerns in Relation zum Gewicht des Überzuges usw. abhängig sind.

Die im Einlaufbereich angeordnete Kühlzone kann in einem Bereich von 5 % bis 25 %, die im Mittelbereich angeordnete Kühlzone in einem Bereich von 10 % bis 50 % und die im Auslaufbereich angeordnete Kühlzone in einem Bereich von 30 % bis 85 % der Gesamtlänge des Kühltunnels verstellbar sein. Da von einer in Bandlaufrichtung konstanten Arbeitsbreite auszugehen ist, kann nur die jeweilige wirksame Länge der Kühlzonen relativ zueinander verstellt werden. Dabei sollte zumindest die angedeutete Relation eingehalten werden, wobei die Länge der einzelnen Kühlzonen in Bandlaufrichtung jeweils größer wird. Bei der Abkühlung von Sonderprodukten können aber auch andere Verhältnisse erforderlich werden.

Die Parameter in den einzelnen Kühlzonen, insbesondere die Temperatur, Menge und die Geschwindigkeit des Kühlmediums, sind einstellbar. Damit wird die optimale Anpassung an die Art des Süßwarenstückes einschließlich des Produktkernes erzielt. Als Produktkerne können Kekse, Kuchen, Waffeln, Pralinenfüllungen, Bonbons, Süßwarenriegel o. dgl. in Betracht kommen. Als Überzugsmasse kommt insbesondere Schokolade und ähliche fetthaltige Massen in Frage, aber auch Kuvertüre, Glasurmassen u. dgl..

Der Kühltunnel kann eine Luftentfeuchtungseinrichtung aufweisen, die sich sinnvollerweise auf sämtliche drei Kühlzonen erstreckt und mit deren Hilfe die relative Luftfeuchtigkeit auf ca. 60 % gehalten bzw. in diesen Bereich abgesenkt wird.

Das Verfahren der eingangs beschriebenen Art kennzeichnet sich erfindungsgemäß dadurch, daß die Süßwarenstücke in einer im Mittelbereich des Kühltunnels angeordneten zweiten Kühlzone schonend durch Strahlungskühlung gekühlt werden.

Die Erfindung basiert auf den Grundgedanken, einen Kühltunnel so zu gestalten und zu betreiben, daß die mit ihm erreichbare Abkühlkurve im wesentlichen der Erstarrungskurve der Überzugsmasse entspricht, wie sie z. B. bei einer Schokolademasse mit einem handelsüblichen Temperiergrad-Meßgerät festgestellt werden kann. Damit sollte in einer ersten Kühlzone intensiv, in einer zweiten Kühlzone schonend durch Strahlungskühlung und in einer dritten Kühlzone wieder intensiv durch Konvektionskühlung gekühlt werden, wobei die erste Kühlzone jedenfalls in der Nähe des Einlaufbereiches, die zweite Kühlzone etwa vor dem Mittelbereich, jedoch nie in die zweite Hälfte des Kühltunnels hineinreichend, und die dritte Kühlzone etwa in der Nähe des Auslaufbereiches des Kühltunnels positioniert werden müssen. Damit stellt sich der typische Temperaturverlauf der Erstarrungskurve einer Überzugsmasse auch im Verlauf der Temperatur der Überzugsmasse im Kühltunnel ein. In der ersten Kühlzone kann die Überzugsmasse von einer Größenordnung von vielleicht 28 ... 32 °C in einen Bereich von vielleicht 22 ... 26 °C abgekühlt werden. Im Mittelbereich des Kühltunnels, in dem die kritische Kristallbildungstemperatur nicht unterschritten werden darf, sollte bei richtig gewählter Temperatur genügend Zeit zur Verfügung stehen, um stabile Kristalle zu bilden. Dabei ist im wesentlichen die Wärme abzuführen, die durch die Erstarrung der Überzugsmasse latent frei wird. Dies kann aber auch mit gleichzeitiger Temperaturerniedrigung von vielleicht 26 °C auf vielleicht 21 °C erfolgen. In der dritten Kühlzone sollte wieder intensiv durch Konvektionskühlung gekühlt werden, wobei im Überzug Temperaturen in der Größenordnung von 14 °C ... 18 °C durchaus erreichbar und sinnvoll sind, so daß die Süßwarenstücke dann einer Verpackung zugeführt werden können.

Die Überzüge der Süßwarenstücke können in der erstem Kühlzone auf eine Temperatur in einem Bereich zwischen 22 °C und 24 °C gekühlt werden. In der zweiten Kühlzone wird im wesentlichen nur die freiwerdende Erstarrungswärme der Überzüge abgeführt. Die Überzüge der Süßwarenstücke werden dann in der dritten Kühlzone auf eine Temperatur in einem Bereich zwischen 12 °C und 16 °C gekühlt. Damit sind generell Bereiche angegeben, die je nach Art des Produktkerns und/oder der Überzugsmasse auch variiert werden können.

Besonders sinnvoll ist es, wenn die Süßwarenstücke durch die erste Kühlzone mit einer Verweilzeit von etwa 1 min., durch die zweite Kühlzone mit einer Verweilzeit von etwa 2 min. und durch die dritte Kühlzone mit einer Verweilzeit von etwa 3 min. geführt werden. Damit ist eine mittlere Gesamtkühlzeit von 6 min. angesprochen. Diese mittlere Gesamtkühlzeit kann jedoch im Bereich von 3 bis 10 min. variieren, wobei es sinnvoll ist, die aufgezeigte Relation einzuhalten.

Die mit Konvektionskühlung arbeitenden Kühlzonen können vorteilhaft im Gegenstrom betrieben werden. Durch die größere mittlere Temperaturdifferenz wird die Intensität der Kühlung in diesen Zonen gesteigert und die Baulänge des Kühltunnels vorteilhaft verkürzt.

Die Erfindung wird anhand eines bevorzugten Ausführungsbeispieles weiter erläutert und beschrieben. Es zeigen:
- Fig. 1: eine schematisierte Seitenansicht einer Ausführungsform des Kühltunnels und
- Fig. 2: den Temperaturverlauf des Überzugs der Süßwarenstücke über der Zeit bzw. den Kühltunnel in Bandlaufrichtung.

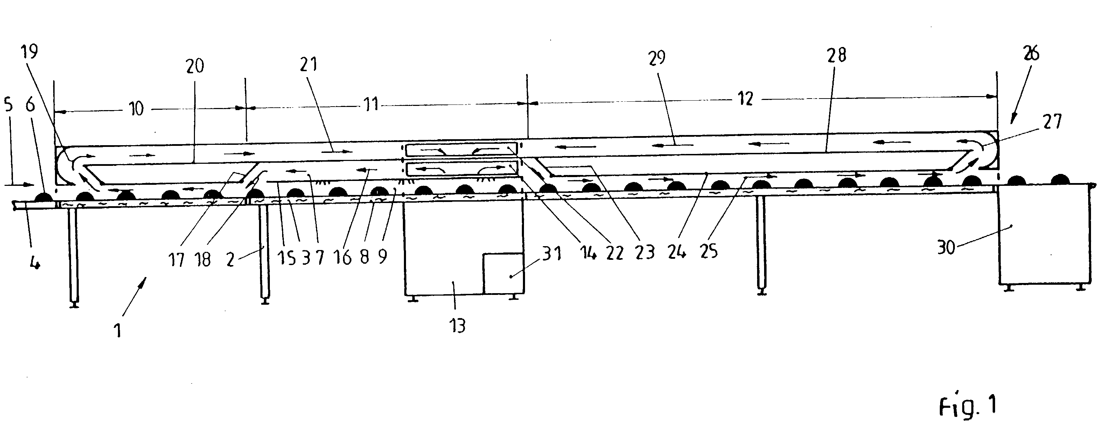

Der in Fig. 1 in sehr schematischer Weise angedeutete Kühltunnel 1 weist einen gestell- oder tischartigen Rahmen 2 auf. Über einen Boden 3 wird ein Transportband 4 in Bandlaufrichtung 5 durch den Kühltunnel 1 geführt, auf dem die Süßwarenstücke 6 aufliegen und während des Durchlaufes durch den Kühltunnel 1 gekühlt werden. Der Kühltunnel 1 ist in bekannter Weise durch hier nicht näher verdeutlichte Hauben segment- oder abschnittsweise unterteilt. Die Hauben sind entsprechend einem Rastermaß in ihrer Länge gestaltet und in der Regel aufklappbar, um den Innenraum 7 des Kühltunnels 1 für Reinigungs-, Wartungs- und Inspektionszwecke leicht zugänglich zu machen. Der Kühltunnel 1 besitzt eine Bodenkühlung 8 und eine Oberkühlung 9. Die Bodenkühlung 8 ist durch einen Wassermantel angedeutet, der von unten durch das Transportband 4 am Boden der Süßwarenstücke 6 wirksam wird. Die vorliegende Erfindung bezieht sich auf die Ausbildung der Oberkühlung 9. Mit dieser Oberkühlung 9 werden über die Länge des Kühltunnels 1 in Bandlaufrichtung 5 hintereinander verteilt angeordnet mehrere Kühlzonen geschaffen, und zwar mindestens drei Kühlzonen 10, 11 und 12. In der ersten Kühlzone 10, die eingangsseitig am Kühltunnel 1 beginnen kann, werden die Süßwarenstücke 6 durch Konvektionskühlung intensiv gekühlt. In der zweiten Kühlzone 11 werden die Süßwarenstücke 6 durch Strahlungskühlung schonend gekühlt. In der dritten Kühlzone 12 werden die Süßwarenstücke intensiv durch Konvektionskühlung gekühlt. Für die Realisierung der einzelnen Kühlzonen 10, 11, 12 gibt es verschiedene Möglichkeiten. In Fig. 1 ist eine sehr einfache Möglichkeit angedeutet. Von einem Gebläse 13 gelangt über einen Kältemittelkreislauf gekühlte Luft über einen Druckschacht 14 in den Innenraum 7 des Kühltunnels, und zwar oberhalb einer Absorptionsplatte 15. Diese Absorptionsplatte 15 ist wesentliches Element der Strahlungskühlung in der Kühlzone 11. Die Absorptionsplatte 15 nimmt auf ihrer Unterseite die Strahlungswärme der Süßwarenstücke 6 auf. Diese Strahlungswärme wird von der Rückseite der Absorptionsplatte 15 von dem Kühlluftstrom gemäß Pfeil 16 mitgenommen bzw. hinweggeführt. Am Übergang von der Kühlzone 11 zur Kühlzone 10 ist eine schwenkbare Klappe 17 vorgesehen, durch die die kühle Luft gemäß Pfeil 18 nach unten in einen Bereich geleitet wird, in welchem sie direkt an der Oberfläche der Süßwarenstücke 6 in der ersten Kühlzone 10 angreifen kann, so daß hier die Konvektionskühlung verwirklicht wird. Um die wirksame Länge der Kühlzone 10 zur Kühlzone 11 einstellen zu können, können mehrere der Klappen 17 über einen gewissen Übergangsbereich verteilt angeordnet sein. Am Beginn der ersten Kühlzone 10 wird die Kühlluft gemäß Pfeil 19 in einen Teil des Innenraums 7 oberhalb eines Leitbleches 20 geführt. Die Kühlluft strömt gemäß Pfeil 21 zu einem Saugschacht 22 und damit zurück zum Gebläse 13. Es versteht sich, daß sowohl der Druckschacht 14 wie auch der Saugschacht 22 zwei- oder mehrteilig ausgebildet sein können und zu beiden Seiten am Kühltunnel 1 vorgesehen sind.

Ein anderer Teil der Kühlluft gelangt von dem Gebläse 13 in die Kühlzone 12. Auch hier ist eine schwenkbare Klappe 23 an einem Leitblech 24 vorgesehen, um die Kühlluft gemäß Pfeil 25 direkt an der Oberfläche der Süßwarenstücke 6 angreifen zu lassen und damit in der Kühlzone 12 die Konvektionskühlung zu verwirklichen. Am Ende 26 des Kühltunnels 1 wird die Kühlluft gemäß Pfeil 27 oberhalb eines Leitbleches 28 gemäß Pfeil 29 zum Saugschacht 22 zurückgeführt. Um auch hier die relative Länge der Kühlzonen 11 und 12 aufeinander einstellen zu können, können mehrere der Klappen 23 über die Länge verteilt in einem gewissen Übergangsbereich vorgesehen sein. Es ist auch möglich, die Absorptionsplatte 15 in mehrere Platten zu unterteilen, die einander teilweise überdecken, so daß durch Verschiebung der einzelnen Platten die wirksame Länge der Kühlzone 11 verändert bzw. eingestellt werden kann. Weiterhin ist es möglich, die Klappen 17 und 23 an veränderter Position innerhalb des Kühltunnels einzusetzen, wodurch ebenfalls die wirksame Länge der Kühlzone 11 verändert bzw. eingestellt werden kann. Obwohl hier nur ein Gebläse 13 mit einem in zwei Teilströme aufgeteilten Kühlluftstrom dargestellt und beschrieben wurde, ist es natürlich möglich, auch mehrere getrennte Kühlluftströme zu erzeugen und in den einzelnen Kühlzonen 10, 11 und 12 anzuwenden. Es ist auch möglich, die Absorptionsplatte 15 doppelwandig auszuführen und zur Kühlung dort Kühlwasser einzusetzen.

Zum Antrieb des Transportbandes 4 durch den Kühltunnel 1 dient eine Antriebsstation 30. Der Kühltunnel 1 kann im Bereich des Gebläses 13 eine Luftentfeuchtungseinrichtung 31 aufweisen.

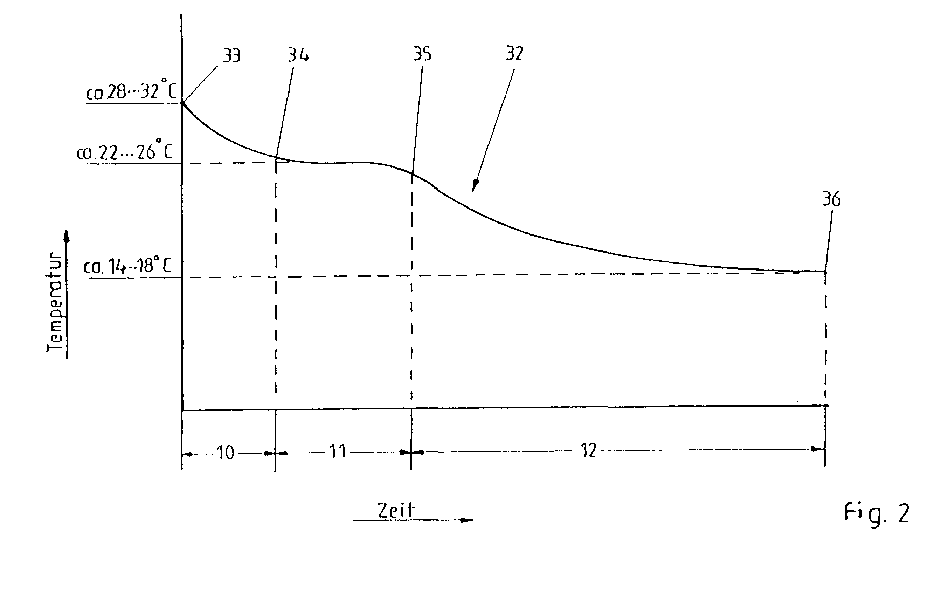

In Fig. 2 ist ein Diagramm des Temperaturverlaufs im Überzug eines Süßwarenstückes 6 beim Durchlauf durch den Kühltunnel 1 mit den drei Kühlzonen 10, 11, 12 nacheinander dargestellt. Die Verweilzeit jedes Süßwarenstückes 6 in der ersten Kühlzone 10 möge 1 min., in der Kühlzone 11 2 min. und in der Kühlzone 12 3 min. betragen, so daß sich die erste Kühlzone 10 über ein Sechstel, die zweite Kühlzone 11 über ein Drittel und die dritte Kühlzone 12 über die Hälfte der Gesamtlänge des Kühltunnels 1 erstrecken möge. Es versteht sich, daß diese längenmäßige Aufteilung der Kühlzonen 10, 11, 12 auf ein bestimmtes Produkt bezogen ist. Die wirksame Länge der Kühlzone 10 kann in einem Bereich von 5 % bis 25 % der Gesamtlänge des Kühltunnels 1 verstellt werden. Relativ dazu kann die wirksame Länge der Kühlzone 11 in einem Bereich von 10 % bis 50 % der wirksamen Gesamtlänge des Kühltunnels 1 einstellbar sein. Schließlich kann die dritte Kühlzone 11 in ihrer wirksamen Länge auf 30 % bis 85 % der Gesamtlänge des Kühltunnels einstellbar sein. Der Verlauf der Temperatur im Überzug eines Süßwarenstückes beim Durchlauf durch den Kühltunnel 1 ist durch eine durchgezogene Linie 32 wiedergegeben. Beim Eintritt in die Kühlzone 10 bzw. in den Kühltunnel 1 kann der Überzug im Punkt 33 eine Temperatur von etwa 28 °C bis 32 °C aufweisen, wie es für ein aus einer Überziehmaschine austretendes Produkt typisch ist. Beim Durchlauf der Süßwarenstücke 6 durch die Kühlzone 10 wird am Übergang 34 zwischen der Kühlzone 10 und der Kühlzone 11 etwa eine Temperatur von 22 °C bis 26 °C erreicht. In der Kühlzone 11 schließt sich dann infolge der schonend durchgeführten Strahlungskühlung ein Bereich an, in welchem die Temperatur konstant bleibt und im wesentlichen nur die Erstarrungswärme abgeführt wird. Am Ende der Kühlzone 11 im Punkt 35 liegt die Temperatur des Überzuges nur geringfügig unter der Temperatur am Übergang 34. In der dritten Kühlzone 12 wird nun mit Konvektion wieder intensiv gekühlt, so daß hier ein steilerer Abfall der Temperatur stattfindet. Am Ausgang 36 der dritten Kühlzone 12 kann das Süßwarenstück 6 in seinem Überzug eine Temperatur von 14 °C bis 18 °C aufweisen, so wie es für den Einlauf in eine Verpackungsmaschine sinnvoll ist.

### BEZUGSZEICHENLISTE

- 1 -: Kühltunnel
- 2 -: Rahmen
- 3 -: Boden
- 4 -: Transportband
- 5 -: Bandlaufrichtung
- 6 -: Süßwarenstücke
- 7 -: Innenraum
- 8 -: Bodenkühlung
- 9 -: Oberkühlung
- 10 -: Kühlzone

- 11 -: Kühlzone
- 12 -: Kühlzone
- 13 -: Gebläse
- 14 -: Druckschacht
- 15 -: Absorptionsplatte
- 16 -: Pfeil
- 17 -: Klappe
- 18 -: Pfeil
- 19 -: Pfeil
- 20 -: Leitblech

- 21 -: Pfeil
- 22 -: Saugschacht
- 23 -: Klappe
- 24 -: Leitblech
- 25 -: Pfeil
- 26 -: Ende
- 27 -: Pfeil
- 28 -: Leitblech
- 29 -: Pfeil
- 30 -: Antriebsstation

- 31 -: Luftentfeuchtungseinr.
- 32 -: Linie
- 33 -: Punkt
- 34 -: Übergang
- 35 -: Punkt
- 36 -: Ausgang

## Patentansprüche

1. Kühltunnel für Süßwarenstücke, die einen Produktkern und einen Überzug aus einer insbesondere vorkristallisierten Masse, beispielsweise Schokolade, aufweisen, mit einem angetriebenen Transportband (4), auf dem die Süßwarenstücke (6) liegend in Bandlaufrichtung (5) durch den Kühltunnel (1) gefördert werden, und mit einer oberhalb des Transportbandes (4) wirksamen Oberkühlung (9), die in Bandlaufrichtung (5) eine mit Strahlungskühlung arbeitende Kühlzone (11) und eine mittels Konvektionskühlung arbeitende Kühlzone (12) aufweist, wobei die mittels Konvektionskühlung arbeitende Kühlzone (12) im Auslaufbereich des Kühltunnels (1) angeordnet ist, **dadurch gekennzeichnet, daß** die Oberkühlung (9) in Bandlaufrichtung (5) mindestens drei Kühlzonen (10, 11, 12) aufweist, und daß die mit Strahlungskühlung arbeitende Kühlzone (11) im Mittelbereich des Kühltunnels (1) angeordnet ist.

2. Kühltunnel nach Anspruch 1, **dadurch gekennzeichnet, daß** die im Einlaufbereich des Kühltunnels (1) angeordnete Kühlzone (10) eine mittels Konvektionskühlung arbeitende Kühlzone ist.

3. Kühltunnel nach Anspruch 1 oder 2, **dadurch gekennzeichnet, daß** die Länge der drei Kühlzonen (10, 11, 12) veränderlich einstellbar ist.

4. Kühltunnel nach Anspruch 3, **dadurch gekennzeichnet, daß** die im Einlaufbereich angeordnete Kühlzone (10) in einem Bereich von 5 % bis 30 %, die im Mittelbereich angeordnete Kühlzone (11) in einem Bereich von 10 % bis 50% und die im Auslaufbereich angeordnete Kühlzone (12) in einem Bereich von 30 % bis 85 % der Gesamtlänge des Kühltunnels (1) verstellbar ist.

5. Kühltunnel nach einem oder mehreren der Ansprüche 1 bis 4, **dadurch gekennzeichnet, daß** die Parameter in den einzelnen Kühlzonen (10, 11, 12), insbesondere die Temperatur, Menge und die Geschwindigkeit des Kühlmediums, einstellbar sind.

6. Kühltunnel nach einem oder mehreren der Ansprüche 1 bis 5, **dadurch gekennzeichnet, daß** der Kühltunnel (1) eine Luftentfeuchtungseinrichtung (31) aufweist.

7. Verfahren zum Betrieb eines Kühltunnels für Süßwarenstücke, die einen Produktkern und einen Überzug aus einer insbesondere vorkristallisieren Masse, beispielsweise Schokolade, aufweisen, mit einem angetriebenen Transportband (4), auf dem die Süßwarenstücke (6) liegend in Bandlaufrichtung (5) durch den Kühltunnel (1) gefördert werden, und mit einer oberhalb des Transportbandes (4) wirksamen Oberkühlung (9), die in Bandlaufrichtung (5) eine mit Strahlungskühlung arbeitende Kühlzone (11) und eine mittels Konvektionskühlung arbeitende Kühlzone (12) aufweist, wobei die Süßwarenstücke (6) in der mittels Konvektionskühlung arbeitenden und im Auslaufbereich des Kühltunnels (1) angeordneten Kühlzone (12) intensiv gekühlt werden, **dadurch gekennzeichnet, daß** die Süßwarenstücke (6) in einer im Mittelbereich des Kühltunnels (1) angeordneten zweiten Kühlzone (11) schonend durch Strahlungskühlung gekühlt werden.

8. Verfahren nach Anspruch 7, **dadurch gekennzeichnet, daß** die Überzüge der Süßwarenstücke (6) in der ersten Kühlzone (10) durch Konvenktionskühlung auf eine Temperatur in einem Bereich zwischen 22 °C und 26 °C intensiv gekühlt werden, daß in der zweiten Kühlzone (11) im wesentlichen nur die freiwerdende Erstarrungswärme der Überzüge abgeführt wird, und daß die Überzüge der Süßwarenstücke (6) in der dritten Kühlzone (12) auf eine Temperatur in einem Bereich zwischen 14 °C und 18 °C gekühlt werden.

9. Verfahren nach Anspruch 7 oder 8, **dadurch gekennzeichnet, daß** die Süßwarenstücke (6) durch die erste Kühlzone (10) mit einer Verweilzeit von etwa 1 min., durch die zweite Kühlzone (11) mit einer Verweilzeit von etwa 2 min. und durch die dritte Kühlzone (12) mit einer Verweilzeit von etwa 3 min. geführt werden.

10. Verfahren nach einem der Ansprüche 7 bis 9, **dadurch gekennzeichnet, daß** die mit Konvektionskühlung arbeitenden Kühlzonen (10, 12) im Gegenstrom betrieben werden.

## Claims

1. A cooling tunnel for cooling articles of the confectionary industry, the articles having a core and a coating of a preferably precrystallized mass, f.i. chocolate mass, the cooling tunnel including a driven conveying belt (4) carrying the lying articles (6) in the longitudinal direction (5) through the cooling tunnel (1) and having an upper cooling (9) acting above the conveying belt (4), the upper cooling (9) including a cooling zone (11) acting with radiant cooling and a cooling zone (12) acting with convection cooling, the cooling zone (12) being positioned near to the exit of the cooling tunnel (1), **wherein** the upper cooling (9) includes at least three cooling zones (10, 11, 12) being arranged in longitudinal direction (5) one behind the other, and the cooling zone (11) acting with radiant cooling is positioned in the middle region of the cooling tunnel (1).

2. The cooling tunnel of claim 1, **wherein** the cooling zone (10) acting in the region of the entry of the cooling tunnel (1) is a cooling zone acting with convection cooling.

3. The cooling tunnel of claim 1 or 2, **wherein** the active length of the three cooling zones (10, 11, 12) can be adjusted to variable levels.

4. The cooling tunnel of claim 3, **wherein** the cooling zone (10) being arranged near to the entry region can be adjusted to a variable level of 5 % to 30 % of the total length of the cooling tunnel (1), the cooling zone (11) being arranged near to the middle region can be adjusted to a variable level of 10 % to 50 % of the total length of the cooling tunnel (1), and the cooling zone (12) being arranged near to the exit region can be adjusted to a variable level of 30 % to 85 % of the total length of the cooling tunnel (1).

5. The cooling tunnel of one or more of the claims 1 to 4, **wherein** the parameters of the several cooling zones (10, 11, 12) especially the temperature, the quantity and the speed of the cooling medium, are to be adjusted to certain levels.

6. The cooling tunnel of one or more of the claims 1 to 5, **wherein** the cooling tunnel includes a dehumidifier (31).

7. A method for the operation of a cooling tunnel for cooling articles of the confectionary industry, the articles having a core and a coating of a preferably precrystallized mass, f.i. chocolate mass, the cooling tunnel including a driven conveying belt (4) carrying the lying articles (6) in the longitudinal direction (5) through the cooling tunnel (1) and having an upper cooling (9) acting above the conveying belt (4), the upper cooling (9) including a cooling zone (11) acting with radiant cooling and a cooling zone (12) acting with convection cooling, the articles (6) are intensively cooled in the cooling zone (12) being positioned near to the exit of the cooling tunnel (1), **wherein** the articles (6) are gently cooled in a second cooling zone (11) acting with radiant cooling and being positioned in the middle region of the cooling tunnel (1).

8. The method of claim 7, **wherein** the coatings of the articles (6) in the first cooling zone (10) acting with convection cooling are intensively cooled to a temperature in a range between 22 °C and 26 °C, substantially only the solidification heat is taken up in the second cooling zone (11), and the coatings of the articles (6) in the third cooling zone (12) are cooled to a temperature in a range between 14 °C and 18 °C.

9. The method of claim 7 or 8, **wherein** the articles (6) are conveyed through the first cooling zone (10) with a holding time of about 1 min., through the second cooling zone (11) with a holding time of about 2 min., and through the third cooling zone (12) with a holding time of about 3 min..

10. The method of one of the claims 7 to 9, **wherein** the cooling zones (10, 12) acting with convection cooling are operated in reverse direction flow.

## Revendications

1. Tunnel de refroidissement pour des articles de confiserie qui présentent un noyau de produit et un revêtement en une masse, en particulier précristallisée, telle que du chocolat, avec une bande transporteuse (4) entraînée sur laquelle les articles de confiserie sont transportés couchés en direction de déplacement de la bande (5) à travers le tunnel de refroidissement (1), et avec une réfrigération supérieure (9), active au-dessus de la bande transporteuse (4), qui présente, dans la direction de déplacement de la bande (5), une zone de refroidissement (11) travaillant au moyen d'une réfrigération par rayonnement et une zone de refroidissement (12) travaillant au moyen d'une réfrigération par convection, la zone de refroidissement (12) travaillant au moyen d'une réfrigération par convection étant disposée dans la zone de sortie du tunnel de refroidissement (1),
**caractérisé en ce que** la réfrigération supérieure (9) présente, en direction de déplacement de la bande (5), au moins trois zones de refroidissement (10, 11, 12) et que la zone de refroidissement (11) travaillant avec une réfrigération par rayonnement est disposée dans la zone médiane du tunnel de refroidissement (1).

2. Tunnel de refroidissement selon la revendication 1, **caractérisé en ce que** la zone de refroidissement (10) disposée dans la zone d'entrée du tunnel de refroidissement (1) est une zone de refroidissement travaillant au moyen d'une réfrigération par convection.

3. Tunnel de refroidissement selon la revendication 1 ou 2, **caractérisé en ce que** les longueurs des trois zones de refroidissement (10, 11, 12) sont réglables de manière variable.

4. Tunnel de refroidissement selon la revendication 3, **caractérisé en ce que** la zone de refroidissement (10) disposée dans la zone d'entrée est réglable dans une plage de 5% à 30%, la zone de refroidissement (11) disposée dans la zone médiane dans une plage de 10% à 50% et la zone de refroidissement (12) disposée dans la zone de sortie dans une plage de 30% à 85% de la longueur totale du tunnel de refroidissement (1).

5. Tunnel de refroidissement selon une ou plusieurs des revendications 1 à 4,
**caractérisé en ce que** les paramètres dans les zones de refroidissement (10, 11, 12) individuelles, en particulier la température, la masse et la vitesse de l'agent de refroidissement, sont réglables.

6. Tunnel de refroidissement selon une ou plusieurs des revendications 1 à 5,
**caractérisé en ce que** le tunnel de refroidissement (1) présente un dispositif de déshumidification d'air (31).

7. Procédé d'exploitation d'un tunnel de refroidissement pour des articles de confiserie qui présentent un noyau de produit et un revêtement en une masse, en particulier précristallisée, telle que du chocolat, avec une bande transporteuse (4) entraînée sur laquelle les articles de confiserie sont transportés couchés en direction de déplacement de la bande (5) à travers le tunnel de refroidissement (1), et avec une réfrigération supérieure (9), active au-dessus de la bande transporteuse (4), qui présente, dans la direction de déplacement de la bande (5), une zone de refroidissement (11) travaillant au moyen d'une réfrigération par rayonnement et une zone de refroidissement (12) travaillant au moyen d'une réfrigération par convection, les articles de confiserie (6) étant refroidis intensivement dans la zone de refroidissement (12) travaillant au moyen d'une réfrigération par convection et disposée dans la zone de sortie du tunnel de refroidissement (1), **caractérisé en ce que** les articles de confiserie (6) sont refroidis avec ménagements par réfrigération par rayonnement dans une deuxième zone de refroidissement (11) disposée dans la zone médiane du tunnel de refroidissement (1).

8. Procédé selon la revendication 7,
**caractérisé en ce que** les revêtements des articles de confiserie (6) sont refroidis intensivement par réfrigération par convection dans une plage entre 22°C et 26°C dans la première zone de refroidissement (10), que seulement essentiellement la chaleur de solidification libérée des revêtements est évacuée dans la deuxième zone de refroidissement (11) et que les revêtements des articles de confiserie (6) sont refroidis à une température dans une plage entre 14°C et 18°C dans la troisième zone de refroidissement (12).

9. Procédé selon la revendication 7 ou 8,
**caractérisé en ce que** les articles de confiserie (6) sont conduits à travers la première zone de refroidissement (10) avec un temps de séjour d'environ 1 minute, à travers la deuxième zone de refroidissement (11) avec un temps de séjour d'environ 2 minutes et à travers la troisième zone de refroidissement (12) avec un temps de séjour d'environ 3 minutes.

10. Procédé selon l'une des revendications 7 à 9,
**caractérisé en ce que** les zones de refroidissement (10, 12) travaillant avec une réfrigération par convection sont opérées à contre-courant.
